# EUROPEAN PATENT APPLICATION

(11) **EP 4 848 204 A1**
(43) Date of publication of application: **02.12.2026**
(21) Application number: 26180898.4
(22) Date of filing: 26.05.2026
(51) Int. Cl.: G06T 7/00, G06F 18/2415

(54) **INFORMATION PROCESSING APPARATUS, CONTROL METHOD FOR INFORMATION PROCESSING APPARATUS, AND PROGRAM**

(30) Priority: 27.05.2025 JP 2025088183
(71) Applicant: Canon Kabushiki Kaisha, Tokyo 146-8501 (JP)
(72) Inventor: NAKAGOMI, Keita, Ohta-ku, Tokyo, 146-8501 (JP); ISHIKAWA, Ryo, Ohta-ku, Tokyo, 146-8501 (JP); MIYASA, Kazuhiro, Ohta-ku, Tokyo, 146-8501 (JP)
(74) Representative: TBK

(57) **Abstract**

An information processing apparatus (10) for detecting a disease from a medical image, comprising: acquisition means (52) for acquiring detection history information related to the disease; determination means (53) for determining, based on the detection history information, a detection setting for detecting the disease from the medical image; and detection means (54) for detecting the disease from the medical image based on the detection setting, wherein the detection setting includes (i) a detection sensitivity parameter defining detection sensitivity for the disease, and/or (ii) whether to execute, of a first detection of analyzing the medical image and detecting the disease and a second detection of detecting the disease with a sensitivity higher than that of the first detection, the second detection.

## Description

### TECHNICAL FIELD

The present disclosure relates to an information processing apparatus, a control method for an information processing apparatus, and a program.

### BACKGROUND

In the medical field, diagnosis using three-dimensional images acquired by various image capturing apparatuses (modalities) such as a computed tomography apparatus (hereinafter referred to as a CT (Computed Tomography) apparatus) has been performed. In this diagnosis, detection of a region representing an abnormality appearing in medical image data has been performed, but with recent sophistication of imaging apparatuses, the number of images has also increased, and therefore the burden on physicians has increased. Therefore, in order to reduce the labor of physicians, automatic or semi-automatic abnormal region detection/extraction techniques from images have been proposed.

Noguchi et. al. "Deep learning-based algorithm improved radiologists' performance in bone metastases detection on CT" Eur Radiol. 2022 Nov;32(11):7976-7987. discloses a method of constructing an inference estimator that infers a disease region from an image by using, as training data, an image and correct region information of a disease region (bone metastasis region) appearing in the image collected for a large number of cases. In Noguchi et. al. "Deep learning-based algorithm improved radiologists' performance in bone metastases detection on CT" Eur Radiol. 2022 Nov;32(11):7976-7987., a model using deep learning is constructed based on information of pixel values of images of training data and information representing a disease region appearing in the image. In this technique, disease region information appearing in an unknown input image is estimated based on the trained model. Furthermore, a technique for increasing the estimation accuracy of a disease region by combining two deep learning models is also disclosed. Estimating specific region information may, in other words, be referred to as extracting a specific region.

### SUMMARY

However, even when the technique described in Noguchi et. al. "Deep learning-based algorithm improved radiologists' performance in bone metastases detection on CT" Eur Radiol. 2022 Nov;32(11):7976-7987. is used, room remains for improvement in disease region extraction processing accuracy, and further improvement in accuracy is required.

The present disclosure has been made in view of the above problem, and provides a technique for detecting a disease from a medical image with high accuracy.

The present disclosure in its first aspect provides an information processing apparatus as specified in claim 1. Optional features are specified in claim 2 to 21.

The present disclosure in its second aspect provides a control method for an information processing apparatus as specified in claim 22. Optional features are specified in claims 23 and 24.

The present disclosure in its third aspect provides a program as specified in claim 25.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram showing a functional configuration of an information processing apparatus according to a first embodiment.
FIG. 2 is a flowchart showing an example of a detection processing procedure of the information processing apparatus according to the first embodiment.
FIG. 3 is a diagram showing an example of a cross section of a CT image according to one embodiment.
FIG. 4 is a diagram showing an example of a case where a bone metastasis region is present in a cross section of a CT image according to one embodiment.
FIG. 5 is a diagram showing a functional configuration of an information processing apparatus according to a second embodiment.
FIG. 6 is a flowchart showing an example of a detection processing procedure of the information processing apparatus according to the second embodiment.
FIG. 7 is a diagram showing an example of a case where a lung cancer region and a bone metastasis region are present in a cross section of a CT image according to one embodiment.
FIG. 8 is a diagram showing a functional configuration of an information processing apparatus according to a third embodiment.
FIG. 9 is a flowchart showing an example of a detection processing procedure of the information processing apparatus according to the third embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <First Embodiment>

The information processing apparatus according to the first embodiment is an information processing apparatus that detects a predetermined disease from a medical image. This apparatus has a function of detecting, from an image, a region related to a predetermined disease. Here, the region related to a predetermined disease can also be expressed as the contour shape or the center of gravity of the disease appearing in the image, or coordinate information of pixels representing a part of the disease. Furthermore, in the process of performing detection, the apparatus determines detection sensitivity of a detection method for the disease based on history information related to a history of detection of the disease. By determining the sensitivity in that manner, it is possible to obtain higher sensitivity for each disease region in the image while maintaining high specificity in evaluation on an image-by-image basis. Therefore, according to the present disclosure, a highly accurate detection result can be provided to the user. In the present specification, "detection setting" is setting information used to detect a disease from a medical image, and includes, for example, (i) a detection sensitivity parameter (for example, a threshold value) that defines detection sensitivity and/or (ii) whether to execute a second detection performed at a sensitivity higher than that of a first detection. The detection setting may include setting information such as selection of a disease to be detected and selection of a machine learning model used for detection.

Sensitivity is the probability that a person having a disease correctly receives a positive result when tested, and specificity is the probability that a person not having the disease correctly receives a negative result when tested. High sensitivity means that there is a high possibility of correctly determining as positive something that should be determined as positive, or a low possibility of erroneously determining as negative something that should be determined as positive. Also, high specificity means that there is a high possibility of correctly determining a negative thing as negative, or a low possibility of erroneously determining a negative thing as positive.

In the present embodiment, an example of extracting a bone metastasis region from a three-dimensional CT (Computed Tomography) image will be described. However, similar processing can also be performed when targeting images obtained by modalities other than CT (MRI, ultrasound, PET, SPECT, OCT, etc.) or when extracting regions of diseases other than bone metastasis (fracture, inflammation, tumor, nodule, etc.). Here, MRI is an abbreviation for Magnetic Resonance Imaging, and PET is an abbreviation for Positron Emission Tomography. SPECT is an abbreviation for Single photon emission computed tomography, and OCT is an abbreviation for Optical Coherence Tomography.

### <Configuration of Information Processing Apparatus>

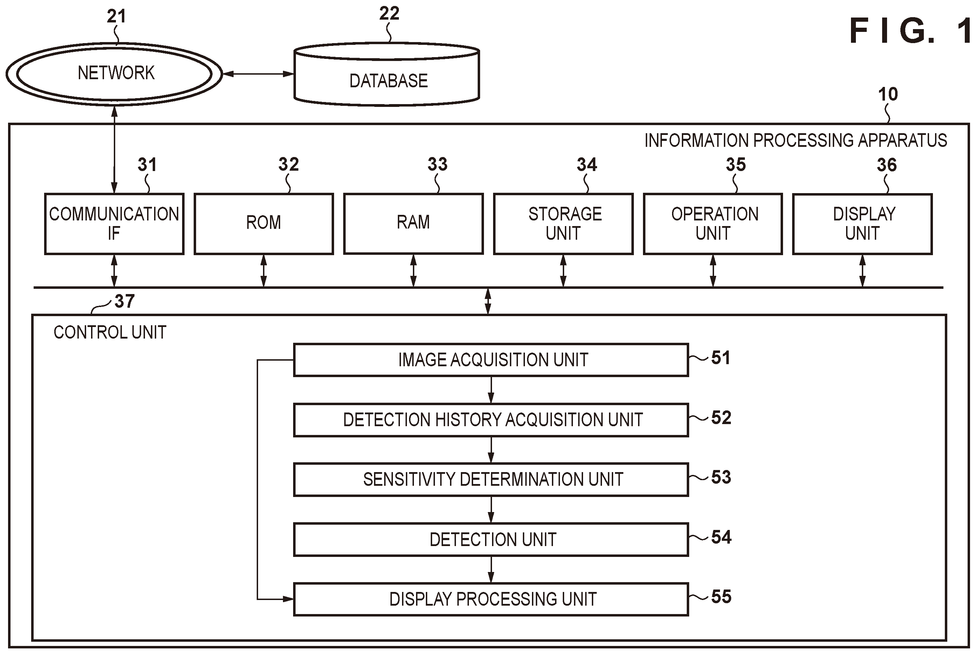

The configuration and processing of the information processing apparatus of the present embodiment will be described below with reference to FIG. 1. FIG. 1 is a block diagram showing an example of a configuration of a system (image processing system) including the information processing apparatus of the present embodiment. The image processing system includes an information processing apparatus 10 and a database 22. The information processing apparatus 10 is communicably connected to the database 22 via a network 21. The network 21 includes, for example, a LAN (Local Area Network) and a WAN (Wide Area Network).

The database 22 holds and manages an image of a subject and information associated with the image. Further, the information managed by the database 22 is assumed to also include information for constituting a trained model calculated from a certain training data group. The information processing apparatus 10 can acquire information such as images held in the database 22 via the network 21.

The information processing apparatus 10 includes a communication IF (Interface) 31 (communication unit), a ROM (Read Only Memory) 32, a RAM (Random Access Memory) 33, a storage unit 34, an operation unit 35, a display unit 36, and a control unit 37.

The communication IF 31 (communication unit) is configured by, for example, a LAN card, and realizes communication between an external apparatus (for example, the database 22) and the information processing apparatus 10. The ROM 32 is configured by, for example, a nonvolatile memory, and stores various programs. The RAM 33 is configured by, for example, a volatile memory, and temporarily stores various kinds of information as data. The storage unit 34 is configured by, for example, an HDD (Hard Disk Drive), and stores various kinds of information as data. The operation unit 35 is configured by, for example, a keyboard, a mouse, or a touch panel, and accepts input of instructions from a user (for example, a physician or a medical technologist).

The display unit 36 is configured by, for example, a liquid crystal display, and displays various kinds of information to the user. The control unit 37 is configured by one or more CPUs (Central Processing Units) or the like, and performs overall control over processing in the information processing apparatus 10. The control unit 37 includes, as its functional components, an image acquisition unit 51, a detection history acquisition unit 52, a sensitivity determination unit 53, a detection unit 54, and a display processing unit 55.

The image acquisition unit 51 acquires an image to be processed from the database 22. This image is an image of a subject acquired by one of various modalities. In the present embodiment, an example in which the image is a three-dimensional CT image will be described, but the image may be another type of image. The present embodiment is also applicable to two-dimensional or higher-dimensional images (a plurality of two-dimensional images, a two-dimensional moving image, a three-dimensional still image, a plurality of three-dimensional images, or a three-dimensional moving image, etc.). It is also applicable regardless of the type of modality.

The detection history acquisition unit 52 acquires history information of detection related to a predetermined disease associated with the image acquired by the image acquisition unit 51. The sensitivity determination unit 53 determines detection sensitivity for detecting a disease based on the history information acquired by the detection history acquisition unit 52. The detection unit 54 detects the disease from the image acquired by the image acquisition unit 51 at the sensitivity determined by the sensitivity determination unit 53. Based on the result calculated by the detection unit 54, the display processing unit 55 causes the image, contour information of the disease region, and/or an identification result to be displayed in the image display region of the display unit 36 in a display form that can be easily visually recognized.

Each component of the above information processing apparatus 10 functions according to a computer program. For example, the functions of the respective components are realized by the control unit 37 (CPU) reading and executing a computer program stored in the ROM 32, the storage unit 34, or the like, using the RAM 33 as a work area. Some or all functions of the components of the information processing apparatus 10 may be realized by using dedicated circuits. Also, some functions of the components of the control unit 37 may be realized by using cloud computing.

For example, a computation apparatus (not shown) located at a place different from the information processing apparatus 10 may be communicably connected to the information processing apparatus 10 via the network 21. Then, the functions of the components of the information processing apparatus 10 or the control unit 37 may be realized by the information processing apparatus 10 and the computation apparatus transmitting and receiving data.

### <Processing>

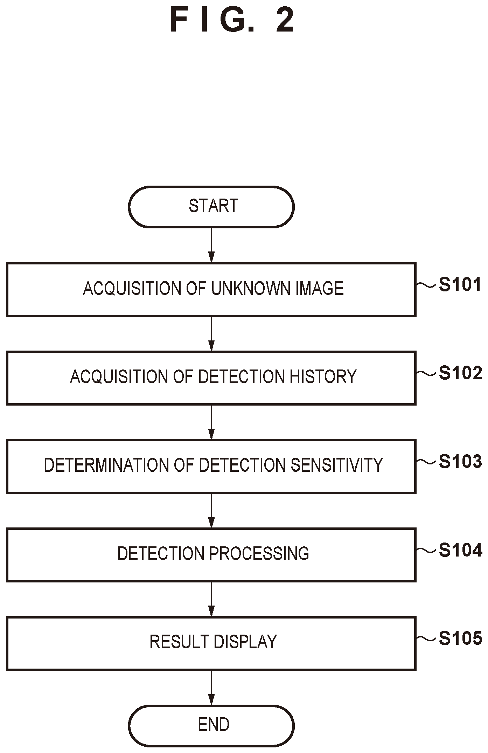

Next, an example of processing of the information processing apparatus 10 according to the present embodiment will be described with reference to FIG. 2. FIG. 2 is a flowchart showing an example of a processing procedure of the information processing apparatus 10 according to the present embodiment. In the present embodiment, an example in which a bone metastasis region is a disease region will be described. However, the present embodiment is also applicable to a case where another site, an abnormal shadow, or a region formed by combining a plurality of regions is used as the disease region.

### (Step S101: image acquisition/display)

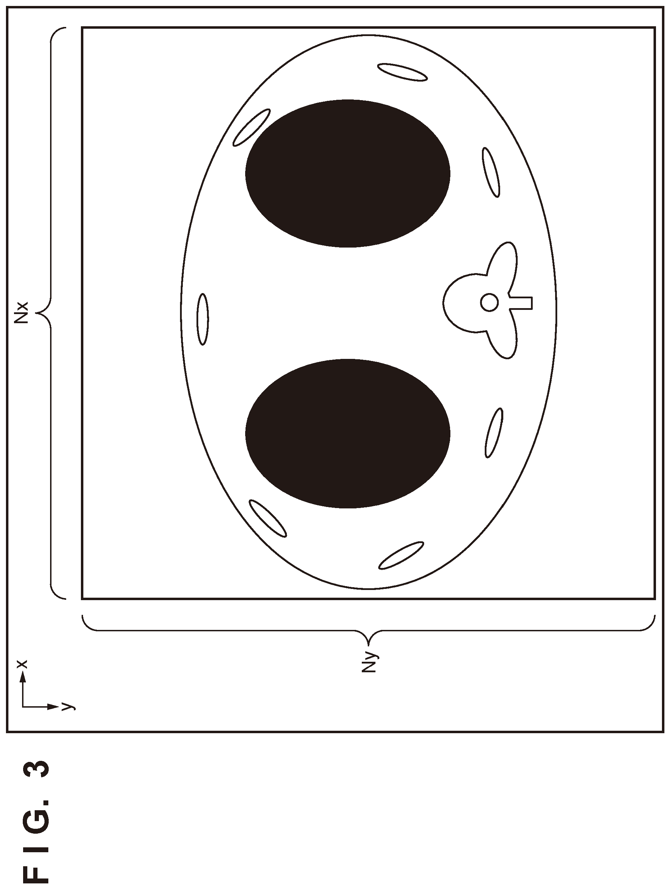

In step S101, when the user instructs acquisition of an image via the operation unit 35, the image acquisition unit 51 acquires the image designated by the user from the database 22 and stores it in the RAM 33. At this time, the display processing unit 55 may cause the image to be displayed within the image display region of the display unit 36. Here, an example of the image is shown in FIG. 3. FIG. 3 shows an example in which the image is a CT image. The CT image of FIG. 3 shows a cross-sectional image of a human torso. In the following description, the number of pixels in the x direction constituting the image is assumed to be Nx, and the number of pixels in the y direction is assumed to be Ny. Also, the number of pixels in the z direction is assumed to be Nz (the size in the z direction is not shown in FIG. 3). That is, the total number of pixels constituting the image is Nx × Ny × Nz.

### (Step S102: detection history acquisition)

In step S102, the detection history acquisition unit 52 acquires history information of detection related to a predetermined disease associated with the image acquired by the image acquisition unit 51 (bone metastasis in the present embodiment). The processing of this step S102 is processing for acquiring information used to determine a detection parameter related to bone metastasis detection processing in subsequent processing (S103 to S104).

Below, in the present embodiment, an example in which a rough extraction result of bone metastasis for the image acquired by the image acquisition unit 51 is used as detection history information related to the disease will be described. Thus, the detection history information may include a rough extraction result of a disease for the medical image. The image is assumed to be a three-dimensional image, and the rough extraction result (detection result) of bone metastasis is assumed to be a three-dimensional volume.

One example of a method for performing rough extraction of bone metastasis is a method using an automatic or semi-automatic segmentation technique using a machine learning model including a deep learning model. Alternatively, a method of extraction by a known region extraction technique such as threshold processing or graph-cut segmentation may be used.

Here, a method for extracting a disease region based on automatic extraction processing using a machine learning model will be described. In region extraction by a machine learning model, first, as preparation, a model for extracting a bone metastasis region (disease region) is trained based on training data. At this time, in the case of supervised machine learning, the training data is configured to include a CT image and information representing a bone metastasis region appearing in the image (that is, a correct region). Then, within a machine learning framework, a model that automatically extracts the correct region is trained.

By applying this trained model to an unknown image (not used in learning), a bone metastasis region appearing in the unknown image can be automatically extracted. As one example, as described in Non-Patent Literature 1, a known model such as U-Net, which is a type of deep learning, can be used for region extraction. However, this region extraction processing may be performed by another deep learning model, or may be performed by a machine-learning-model-based method other than deep learning (for example, a method such as a support vector machine or boosting). Alternatively, as described in Non-Patent Literature 1, a method of extracting a region by a combination of a plurality of machine learning models, such as a combination of U-Net and ResNet, may be used.

Since inference by a machine learning model may depend on the image quality of the input image, the machine learning model/inference estimator may be switched according to image information acquired by the image acquisition unit 51. For example, various trained models specialized for predetermined image qualities may be prepared, and the detection history acquisition unit 52 may switch the model used for inference processing based on the image quality of the input image (medical image). Thereby, detection performance can be improved. More specifically, sharpness of the image, resolution, slice thickness in the body-axis direction, reconstruction function, and the like can be considered as information representing image quality, but the information is not limited thereto, and as long as it is information related to image quality obtained as accompanying information of the input image, trained models specialized for respective ones can be prepared.

In step S102, when the detection history acquisition unit 52 uses a machine learning model, a previously stored trained model may be read out from the database 22 and used when performing processing. That is, after the image is acquired in step S101, the detection history acquisition unit 52 may read out a trained model from the database 22 and perform inference on the acquired image using the model. Then, the inference result may be acquired as history information of detection related to a predetermined disease (bone metastasis in the present embodiment).

More specifically, a region extracted as a bone metastasis region, or a region having high likelihood/probability of being a bone metastasis region, may be used as the detection history information. Alternatively, based on a result obtained by further performing threshold processing or the like on information of likelihood/probability of the bone metastasis region, information indicating positive when a positive determination is made somewhere in the image and negative when no positive determination is made anywhere may be output as the detection history information.

An important point of the history information acquired in this step is to obtain information for determining whether the image acquired by the image acquisition unit 51, taken as a whole, includes a predetermined disease. At this point, it is not necessarily required to specify where in the image the disease appears, and it is desirable to obtain information having high image-based detection sensitivity and specificity. Therefore, as an evaluation criterion for a method based on a machine learning model or the like, the detection method and/or the learning model may be determined by using image-based detection sensitivity and specificity as evaluation values, such as evaluation based on an ROC curve. Here, ROC is an abbreviation for Receiver Operating Characteristic.

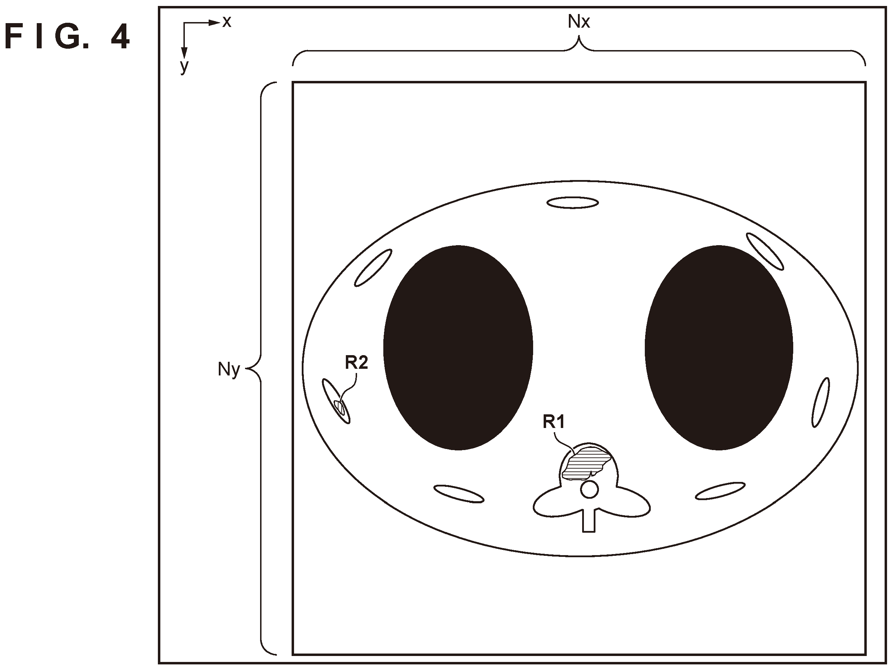

Here, an example of the detection history information acquired by the processing is shown in FIG. 4. FIG. 4 shows an example in which, as a result of performing inference of a disease region using the CT image of FIG. 3 as input, the respective regions R1 and R2 represented by hatching in the drawing are extracted as bone metastasis regions. In the present embodiment, the respective regions of R1 and R2 are assumed to be set as independent disease regions. However, as described above, at the time of this step S102, information for making a positive/negative determination on an image-by-image basis is sufficient, and therefore it is not necessarily required that all disease regions be extracted, and it is sufficient if either one of R1 or R2 can be extracted.

Here, an example in which a processing result for the image acquired by the image acquisition unit 51 is used as the detection history information has been described, but the detection history information is not limited thereto, and a detection result of a predetermined disease for an image captured at a different time may be acquired as the detection history information. Thus, when an already performed detection result is used by the detection history acquisition unit 52, a previously stored detection result may be read out from the database 22.

Alternatively, the number of trials of disease detection processing performed for the patient of the input image or the like may be used as the detection history information. That is, the detection history information may include the number of past detection trials for a disease of the same patient. When the number of trials of detection processing for past examination images of the same patient is large, detection history information (for example, a rough extraction result of bone metastasis) may be acquired on the assumption that suspicion of bone metastasis is strong.

The detection history information acquired in this step S102 may have its content displayed within the display region of the display unit 36.

### (Step S103: detection sensitivity determination)

In step S103, the sensitivity determination unit 53 determines a detection method for a predetermined disease and/or a detection parameter related to the detection method based on the image acquired by the image acquisition unit 51 and the detection history information acquired by the detection history acquisition unit 52. The processing of step S103 is processing for determining sensitivity of disease detection processing as a detection parameter related to bone metastasis detection processing for an image, which is subsequent processing (step S104). The sensitivity determination unit 53 may determine, based on the detection history information, a detection setting used for detecting a predetermined disease. Here, the detection setting includes, for example, a detection sensitivity parameter such as a threshold value that defines detection sensitivity.

As the detection method for the predetermined disease, a disease detection method based on image processing or machine learning as exemplified in step S102 may be used. An important point in this step is to determine a detection parameter for increasing the detection rate on a disease basis. When the rough extraction in step S102 using image processing or machine learning is used, the detection method itself of subsequent S104 may be the same or may be a different method. When the same method is used, the detection parameter may be determined so that the sensitivity of detection processing in subsequent S104 becomes high.

In the present embodiment, the detection parameter is a parameter for controlling the sensitivity of the detection processing. For example, when the likelihood of a bone metastasis region is calculated for each pixel in the image and a positive/negative determination of the pixel is made based on a result of threshold processing on the likelihood, this threshold value corresponds to the detection parameter. For example, when the output of the detection processing is such that a higher value assigned to each pixel in the image indicates a stronger suspicion of bone metastasis, setting the threshold value high decreases detection sensitivity, and setting the threshold value low increases detection sensitivity. However, from the viewpoint of specificity, the relationship is often opposite to that of detection sensitivity, and setting the threshold value high increases specificity, while setting the threshold value low decreases specificity. For this reason, determination of this threshold value is often made in consideration of the balance between both sensitivity and specificity. When the magnitude relationship of values as outputs of the detection method is opposite to the above, the relationship between the threshold setting value and whether sensitivity is high or low is also reversed. In the present embodiment, the detection parameter (threshold value or the like) is one example constituting the above detection setting.

An important point in determining the detection sensitivity in step S103 is the detection sensitivity on a disease basis and the number of overdetected lesions (the number of lesions detected in excess). In the information acquired in the above-described step S102, an important point was to obtain information having high detection sensitivity and specificity on an "image" basis, and this point differs from this step S103 or step S104 described later.

Here, the difference between a disease basis and an image basis will be further explained. In the present embodiment, the disease is such that a plurality of regions may exist in one image. For example, in FIG. 4, assume a case where only R1 and R2 are disease regions in the entire image. Detection sensitivity on a disease basis becomes 100% when both R1 and R2 are detected, 50% when only one of them is detected, and 0% when both are missed. On the other hand, regarding detection on an image basis, sensitivity becomes 100% if either R1 or R2 can be detected, and becomes 0% when both are missed.

As one example of a method for determining a detection parameter emphasizing evaluation on a disease basis, a method can be considered in which disease-region-basis detection sensitivity and the number of overdetections are made to be evaluation values, and a threshold by which such values improve is determined. Specifically, the threshold value may be determined from an evaluation result using an FROC (Free-Response Receiver Operating Characteristic) curve or the like.

In the present embodiment, by further determining this threshold value based on the detection history information, it is possible to increase sensitivity on a disease basis while maintaining specificity on an image basis. More specifically, based on the detection history information acquired by the detection history acquisition unit 52, when the information indicates bone-metastasis positivity or indicates that there is a strong suspicion of bone-metastasis positivity, a threshold value emphasizing detection sensitivity on a disease basis is set.

Conversely, when the information indicates negative or indicates that there is little suspicion of bone-metastasis positivity, a method can be considered in which a threshold value is set with emphasis on the number of overdetected lesions. When, based on the detection history information, the image acquired by the image acquisition unit 51 is determined to be negative, disease detection of subsequent S104 need not be performed, and in that case, at the time of displaying the results in step S105, display indicating a no-detection state may be performed. For example, when it is determined to be negative by the detection history information, it may be determined, as the detection setting, that the second-stage detection processing is not to be executed.

Here, the effect of using a different detection parameter in step S104 when the same detection method is used at the time of acquiring the detection history in step S102 and at the time of the detection processing in the next step S104 will be described.

As shown in FIG. 4, the number of disease regions appearing in one image is not necessarily one, and when there are a plurality of regions, the detection parameters that provide the best evaluation value may differ between evaluation on an image basis and evaluation on a disease-region basis. For example, if the threshold value is set low at the stage of the first step S102, detection sensitivity increases, but false-positive images also increase.

On the other hand, when the threshold value is set high, specificity on an image basis increases, but missed disease regions increase, and as a result, false-negative images also increase. Then, when the detection parameter is determined while observing the balance between detection sensitivity and specificity on an image basis, it is often not possible to achieve 100% when evaluated by detection sensitivity on a disease basis. Therefore, even if the image as a whole can be determined to be positive, missed regions may occur on a disease basis.

One reason why the optimal detection parameter differs between an image basis and a disease basis is that the difficulty of detection differs depending on the size and properties of the disease region. For example, when a disease region that is easy to detect and a disease region that is difficult to detect are mixed in one image, if only the disease region that is easy to detect is to be detected, detection is often possible even if the threshold value is increased. However, when it is desired also to detect a disease region that is difficult to detect, it may be necessary, on the contrary, to lower the threshold value. In other words, when the threshold value is set high, a high evaluation may be obtained from the viewpoint of detection rate on an image basis, but the evaluation may become low from the viewpoint of detection rate on a disease basis.

When a low threshold value is used for all images, as described above, false positives increase including negative images (= specificity decreases), and therefore merely adjusting the threshold value so as to increase detection sensitivity on a disease basis is often insufficient. Therefore, detection processing is required such that high evaluation is obtained from four viewpoints: image-based sensitivity/specificity and disease-based sensitivity/number of overdetections.

Therefore, as a method of increasing the detection rate on a disease basis while making specificity on an image basis as high as possible, it can be considered to separate the detection processing into two-stage processing of image-based positive/negative determination processing and disease-region-based detection processing. More specifically, this is a method in which sensitivity in evaluation on a disease basis is lowered in first-stage detection processing while sensitivity is increased in second-stage detection processing. By setting the detection parameter in this manner, in the first-stage detection processing, processing that places more emphasis on the viewpoint of specificity on an image basis than the second-stage detection processing is performed, and an effect of reducing false-positive images as much as possible can be expected. Furthermore, by performing processing emphasizing the viewpoint of detection rate on a disease basis in the second-stage detection processing, an effect of preventing missed disease regions in positive images can also be expected.

That is, in the present embodiment, the processing is divided into two stages of image-based positive/negative determination and disease-region-based positive/negative determination, and sensitivity on a disease-region basis is changed based on a result of the image-based positive/negative determination. Thereby, there is an effect that detection accuracy can be increased from both the image-level and disease-region-level perspectives.

Diseases such as bone metastasis have a property that when even one disease region is found in an image, suspicion that the disease is also present in other regions becomes strong. Dividing into two-stage processing of image-based positive/negative determination processing and disease-region-based positive/negative determination processing can also be expected to have an effect of reflecting the above property of the disease in the detection processing. That is, for an image determined to be positive for a predetermined disease for the image as a whole (or highly likely to be so), suspicion of the disease in other regions becomes strong, and therefore the detection parameter (threshold value or the like) is controlled so as to increase sensitivity of the detection processing. Thereby, an effect of preventing missed disease regions (= improvement of detection rate on a disease basis) can be expected.

Conversely, for an image determined to be negative for the predetermined disease (or highly likely to be so), the parameter is set so as to reduce the number of overdetections, or the detection processing of step S104 is omitted. Thereby, the number of overdetections of disease regions can be reduced. Thus, when the rough extraction result indicates that the disease is absent, detection sensitivity is determined to be a first sensitivity, and when the rough extraction result indicates that the disease is present, detection sensitivity is determined to be a second sensitivity higher than the first sensitivity, thereby making it possible to realize highly accurate detection. That is, the above omission may, in other words, be said to be a determination, as the detection setting, that the second-stage detection processing is not executed when a negative determination is made based on the detection history information.

When the detection history information indicates no detection (non-detection), or when acquisition of the detection history fails, a default value (sensitivity) may be set as the detection parameter of the predetermined disease detection processing. Also, when the detection history information indicates detection, sensitivity higher than the default value may be set with reference to this default value. This default value (sensitivity) is equivalent to the first sensitivity in the claims. That is, the default value (sensitivity) is equivalent to the first sensitivity used when the rough extraction result indicates that the disease is not present.

Also, when the detection history information is the number of past detection trials for a disease of the same patient, if the number of detection trials is equal to or greater than a threshold value, suspicion of the disease is considered strong, and therefore detection sensitivity may be determined so that sensitivity of the disease detection processing becomes high. That is, when the number of detection trials is less than the threshold value, detection sensitivity may be determined to be the first sensitivity (for example, a default sensitivity), and when the number of detection trials is equal to or greater than the threshold value, detection sensitivity may be determined to be a second sensitivity higher than the first sensitivity. In that case, it may be the number of detection trials of a specific disease for the same image of the same patient. Alternatively, it may be the total value of the number of detection trials of a specific disease for a plurality of images of the same patient (for example, images in the past imaging history). When detection is performed once for each image, the number of the plurality of images itself may be used as the number of detection trials.

### (Step S104: disease detection processing)

In step S104, the detection unit 54 detects the disease from the image acquired by the image acquisition unit 51 based on the detection sensitivity parameter (threshold value or the like) related to the predetermined disease detection method determined by the sensitivity determination unit 53.

The processing of step S104 may be performed on the entire image, or may be performed on a part of the image. For example, regions other than the region detected as the disease region in step S102 may be targeted for detection. Alternatively, in the case of bone metastasis detection processing, when it is desired particularly to increase sensitivity for a certain specific region (vertebral body, rib, limb, etc.), the processing range of step S104 may be narrowed to a specific region (vertebral body, etc.). Specifically, in the detection processing of S104, the detection processing may be performed only within a mask region representing the processing range. Designation of this processing region (creation of the mask region) may be performed by manual input by the user, or an automatic/semi-automatic segmentation technique that recognizes/segments a region of an anatomical structure in the image may be used.

One example of a method for performing region extraction of an anatomical structure is a method using an automatic or semi-automatic segmentation technique using a machine learning model including a deep learning model. Alternatively, a method of extraction by a known region extraction technique such as threshold processing or graph-cut segmentation may also be used. In the above example, if there is a machine learning model for extracting a specific region (vertebral body or the like), the model is applied to the input image, and bone metastasis region detection is performed again for the extracted region, whereby it is possible to reduce the labor required for the user to designate the region to be processed.

### (Step S105: result display)

In step S105, the display processing unit 54 causes the input image and information (detection result) of the disease region detected by the detection unit 54 to be displayed within the image display region. At this time, the detected disease region information may be displayed superimposed on the image. By performing superimposed display, both the positive disease region and the image can be observed, and therefore the user can easily visually confirm whether the detection processing result is correct.

When displaying the detected region, all detected disease regions may be displayed, or a bounding rectangular parallelepiped, a contour of the disease region, or the like may be displayed. Alternatively, when likelihood or confidence of a predetermined disease is obtained from the detection processing, those values may be expressed in a form such as a heat map (likelihood map, confidence map).

Also, when disease region detection processing is performed in step S102 and step S104, the regions detected in the respective steps may be displayed in a distinguishable manner. That is, the rough extraction result in step S102 and the detection result in step S104 may be displayed in a distinguishable manner. When the threshold value is lowered in subsequent step S104, the region detected in preceding step S102 has higher likelihood or probability, and therefore by distinguishing the regions detected in the respective steps, the degree of likelihood or probability can be presented so as to be recognizable by the user.

When a plurality of disease regions are detected for the input image, the user may be prompted to preferentially confirm the region detected in preceding step S102. Then, when the user who has received the information presentation determines that those regions are not diseases (are false positives), display of the detection result may also be stopped (or the regions may be deleted from the detection regions) for the regions detected in subsequent step S104.

The result display processing of step S105 may also be performed immediately after step S102 (rough extraction processing of the disease region). Then, when the user who has received the information presentation determines that the input image is positive as a whole, the processing of step S103 to step S104 may be performed, and those results may be configured to be displayed again by the display processing unit 54.

When the purpose is analysis or measurement of the detection region, the processing of step S105 is not necessarily required, and a configuration may be used in which the result detected in step S104 is stored. Also, while performing the display in step S105, the user may be allowed to select, from among the displayed detection results, what is to be stored and what is not to be stored.

In the above description, the case where the image is a three-dimensional image has been described as an example, but the same processing can be performed even when the image is a two-dimensional image.

As described above, in the present embodiment, in the process of detecting a predetermined disease included in medical image data, detection sensitivity of a detection method for the disease is determined based on history information related to the detection history of the disease. Thereby, a detection result having higher sensitivity and high specificity can be provided to the user, and detection accuracy of the disease can be improved.

### <Second Embodiment>

In the first embodiment, an example has been shown in which, regarding detection processing of a certain predetermined disease, detection history information is acquired in step S102, a detection method for the predetermined disease and a parameter related to detection are determined in step S103 based on the detection history information, and detection processing is performed in step S104. In the present embodiment, processing for detecting a plurality of types of diseases will be exemplified. Below, an example in which two types, namely a lung cancer region and a bone metastasis region, are predetermined plural types of disease regions will be described, but the present embodiment is also applicable to other sites and abnormal shadows.

### <Configuration of Information Processing Apparatus>

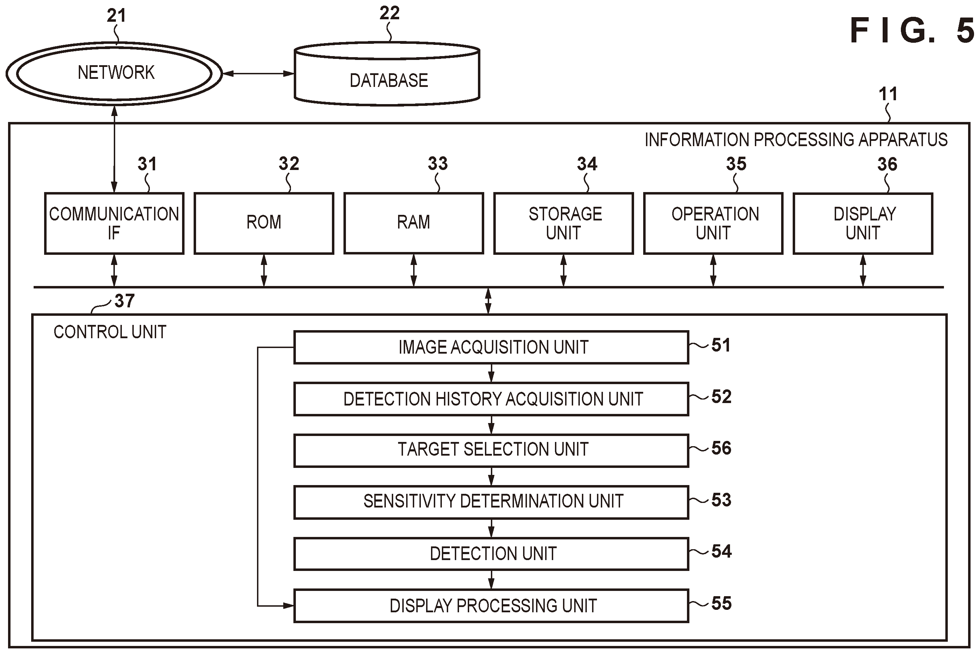

The configuration and processing of the information processing apparatus of the present embodiment will be described below with reference to FIG. 5. FIG. 5 is a block diagram showing an example of a configuration of a system (image processing system) including the information processing apparatus of the present embodiment. A difference from the configuration in the first embodiment shown in FIG. 1 is that, in the information processing apparatus 11, in addition to the configuration of FIG. 1, the control unit 37 further includes a target selection unit 56. Below, differences from the configuration example of the first embodiment will be described.

The target selection unit 56 selects one or more predetermined target diseases to be subjected to detection processing from the image acquired by the image acquisition unit 51.

### <Processing>

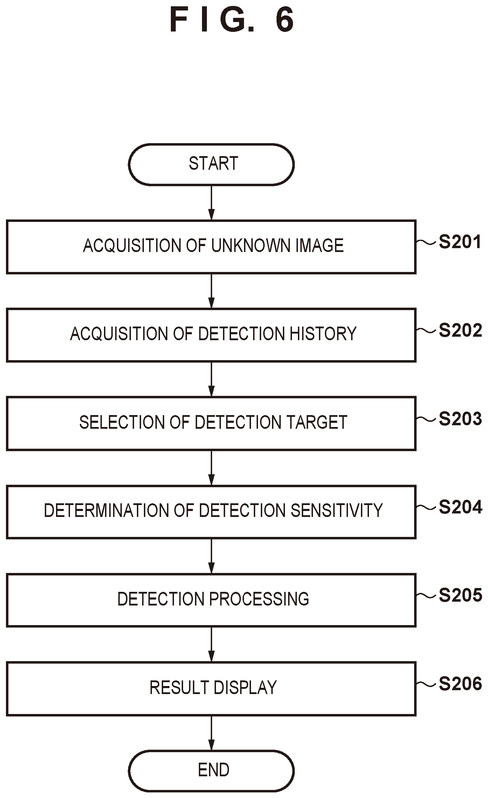

Next, an example of processing of the information processing apparatus 11 according to the present embodiment will be described with reference to FIG. 6. FIG. 6 is a flowchart showing an example of a processing procedure of the information processing apparatus 11 according to the present embodiment. In the steps shown in this flowchart, in steps S201 to S202, processing similar to steps S101 to S102 in the first embodiment shown in FIG. 2 is performed. Processing different from the first embodiment is that step S203 is added. Also, in steps S204 to S206, processing similar to steps S103 to S105 in the first embodiment is performed, but part of the processing is different. Below, differences from the processing procedure of the first embodiment will be mainly described.

### (Step S203: selecting a predetermined disease as a target)

In step S203, the target selection unit 56 selects, based on the detection history information acquired by the detection history acquisition unit 52, a target disease for which the detection unit 54 performs detection processing. The processing of step S203 is processing for selecting a disease target of the detection processing to be performed on the image in subsequent step S205.

In the first embodiment, an example has been shown in which detection processing for a predetermined disease is performed in a two-stage configuration, and the second-stage detection sensitivity is controlled based on the detection history information in the first stage. In the second embodiment, a case is assumed in which the type of disease differs between the first-stage detection target and the second-stage detection target. In the present embodiment, based on a correlation relationship or association with the disease detected in the first stage (the disease in the detection history information), a predetermined disease to be the second-stage detection target is selected. In selecting this predetermined disease, all detection targets may be selected from a plurality of types of diseases, some may be selected, or alternatively, none may be selected.

In general, when cancer grows, it may metastasize to another location in the same organ or to another organ. Then, because there are common sites as locations (organs) to which metastasis occurs depending on the place where the cancer first developed (primary lesion), it is known that there is correlation/relatedness between the primary lesion and the organ to which metastasis occurs. For example, when it is lung cancer (the primary lesion is the lung), it is known that metastasis to the lung and metastasis to bone, liver, brain, and the like are common, and when it is prostate cancer (the primary lesion is the prostate), it is known that metastasis occurs to lymph nodes, bone, lung, liver, brain, and the like. Cancer metastasis search (a clinical act of examining whether cancer metastasis is present) is important for not reducing the patient's QOL (Quality of life), and there is a need to prevent missing metastatic lesions in that search as much as possible.

From the detection history information acquired in step S202, for example, consider a case where suspicion of lung cancer is strong. In that case, as a method for reducing missed metastases to sites identified as common metastatic sites, a method may be adopted in which, for metastasis-detection processing for metastasis to such a site, a detection method is selected or a detection parameter is determined so as to increase sensitivity. For example, in the case of lung cancer, a method can be considered in which missed metastasis is reduced by performing, at high sensitivity, detection processing for diseases such as lung metastasis, bone metastasis, liver metastasis, and brain metastasis, which are strongly related. In selecting the predetermined disease in this step, all of these plurality of types of diseases may be selected as the predetermined diseases, some may be selected, or alternatively, none may be selected.

As specific selection processing, for a predetermined disease, a table in which related diseases are linked may be stored in the database 22. Then, using, as a key, information of the detected disease (or a disease strongly suspected to be detected) obtained from the detection history information, a related disease may be identified and selected as the target disease. Alternatively, a table in which the degree of relatedness is recorded as a continuous value for each combination of diseases may be stored in the database 22 and read out. Alternatively, a mechanism may be provided that allows the target disease to be selected by manual input of the user based on the result of step S202.

Thus, when the first-stage detection target disease is lung cancer (the primary lesion is the lung), one or more of a plurality of diseases such as lung metastasis, bone metastasis, liver metastasis, and brain metastasis, which are related/correlated to lung cancer, may be selected as the second-stage detection target. Also, when the first-stage detection target disease is prostate cancer (the primary lesion is the prostate), one or more of diseases such as lung metastasis, bone metastasis, liver metastasis, and brain metastasis, which are related/correlated to lung cancer, may be selected as the second-stage detection target. Also, one or more of a plurality of diseases such as lymph node metastasis, bone metastasis, lung metastasis, liver metastasis, and brain metastasis, which are related/correlated to prostate cancer, may be selected.

### (Step S204: determination of detection sensitivity)

In step S204, the sensitivity determination unit 53 determines, based on the image acquired by the image acquisition unit 51, the detection history information acquired by the detection history acquisition unit 52, and further the disease selected by the target selection unit 56, a detection method for the selected disease and a detection parameter related to the detection method. Thereby, detection sensitivity for the selected disease is determined. At that time, detection sensitivity may also be determined for other diseases other than the disease detected in the first stage (other than the disease in the detection history information). The processing of this step S204 is processing for determining a detection sensitivity parameter related to disease detection processing for the image in subsequent step S205.

The method of determining detection sensitivity in this step is basically the same as step S103 of the first embodiment. In the first embodiment, it has been assumed that there is one target disease, but in the second embodiment, detection sensitivity in subsequent detection processing is determined based on detection history information for different disease types. That is, when a disease having strong correlation (high relatedness) with the disease obtained from the detection history information is selected by the target selection unit 56, the detection method and/or the detection parameter are determined so as to increase sensitivity of the detection processing. Conversely, when a disease having weak correlation (low association) with the disease obtained from the detection history information is selected by the target selection unit 56, detection processing is performed with a default detection parameter. Alternatively, when a disease having low association is selected by the target selection unit 56, the detection method and/or the detection parameter may be determined so as to lower the sensitivity of the detection processing.

In other words, detection sensitivity may be determined to be a first sensitivity for a target disease having a first correlation, and detection sensitivity may be determined to be a second sensitivity higher than the first sensitivity for a target disease having a second correlation stronger than the first correlation. By thus increasing sensitivity in the case of a disease of high relatedness, an effect of suppressing misses can be expected, and in the case of a disease of low relatedness, by lowering detection sensitivity, an effect of suppressing overdetections can be expected.

Also, when there are a plurality of types of diseases selected by the target selection unit 56 and detection of the respective diseases is handled individually, a detection method/algorithm may be prepared for each, and the detection parameter may be controlled. Alternatively, a method capable of detecting a plurality of types of diseases collectively may be adopted, and the detection parameter may be controlled.

For each of the plurality of types of predetermined diseases, a default value (sensitivity) may be set as the detection parameter of the detection processing. Also, when the detection history information indicates no detection (non-detection), or when acquisition of the detection history information has failed, the default value may be used. Then, when the detection history information indicates detection, adjustment may be made so as to increase sensitivity relative to the default value (sensitivity), using the default value (sensitivity) as a reference.

### (Step S205: disease detection processing)

In step S205, the detection unit 54 detects the disease from the image acquired by the image acquisition unit 51 based on the detection method for the predetermined disease determined by the sensitivity determination unit 53 and the detection parameter (threshold value or the like) related to the detection method. At this time, when there are a plurality of types of diseases selected by the target selection unit 56 and a plurality of detection methods (algorithms) and detection parameters are determined by the sensitivity determination unit 53, detection processing for them is performed. At this time, detection processing may be performed for all selected diseases, or detection processing may be performed for some of the diseases.

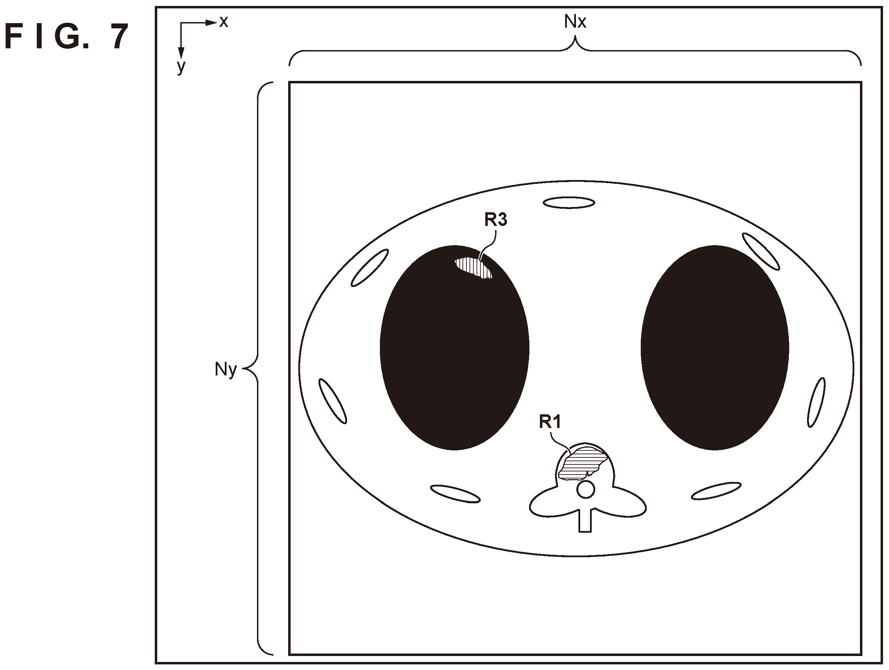

Here, an example of the image is shown in FIG. 7. In FIG. 7, it is assumed that R3 represented by hatching in the drawing represents a lung cancer region, and R1 represents a bone metastasis region. When an example flow of the processing described in the second embodiment is made to correspond to the drawings, it is as follows. First, with the CT image of FIG. 3 as input, the lung cancer region R3 is detected by lung cancer detection processing in step S202. Next, the detection result of the lung cancer region is acquired as detection history information, and bone metastasis is selected as the target disease in step S203.

Thereafter, in step S204, the detection method and/or the detection parameter is set. At that time, since bone metastasis is related to lung cancer, the detection method and/or the detection parameter is determined so that detection sensitivity becomes high. Then, in step S205, bone metastasis detection processing is performed. Finally, in step S206, the lung cancer detection result obtained in step S202 and/or the bone metastasis detection result obtained in step S205 is displayed. Thus, by performing detection processing while controlling the detection parameter so as to increase sensitivity of detection processing for a disease having high association, an effect of reducing missed detections can be expected.

The processing of this step S205 may be performed on the entire image or on a part of the image, similarly to the first embodiment.

### (Step S206: result display)

In step S206, the display processing unit 54 causes the input image and information of the disease region detected by the detection unit 54 to be displayed within the image display region. At this time, the detected disease region information may be displayed superimposed on the image. By performing superimposed display, both the positive disease region and the image can be observed, and therefore the user can easily confirm whether the detection processing result is correct. When the detection history information acquired by the detection history acquisition unit 52 has information of the disease region, that information may also be displayed together.

Also, when displaying the detected region, all detected disease regions may be displayed, or a bounding rectangular parallelepiped, a contour of the disease region, or the like may be displayed. Alternatively, when likelihood or confidence of a predetermined disease is obtained from the detection processing, those values may be expressed in a form such as a heat map.

Also, the result display of this step S206 may be performed immediately after step S202. Then, the user who has received the information presentation may select the target disease, perform the processing of steps S204 to S205, and cause those results to be displayed again by the display processing unit 54.

As described above, in the present embodiment, in the process of detecting a predetermined plurality of types of diseases included in medical image data, a disease to be targeted for detection is selected based on history information related to the detection history of the disease. Then, a detection method and/or detection sensitivity for detecting the disease to be detected is determined. Thereby, a detection result having higher sensitivity and/or high specificity can be provided to the user.

### <Third Embodiment>

In the first embodiment, an example has been shown in which, regarding detection processing of a certain predetermined disease, detection history information is acquired in step S102, a detection method and/or a detection parameter for the predetermined disease is determined in step S103 based on the detection history information, and detection processing is performed in step S104. In the present embodiment, processing for detecting a disease by using two detection units having different detection sensitivities and analyzing an input image is exemplified. Below, an example in which a bone metastasis region is a predetermined disease region will be described, but the present embodiment is also applicable to other sites and abnormal shadows.

### <Configuration of Information Processing Apparatus>

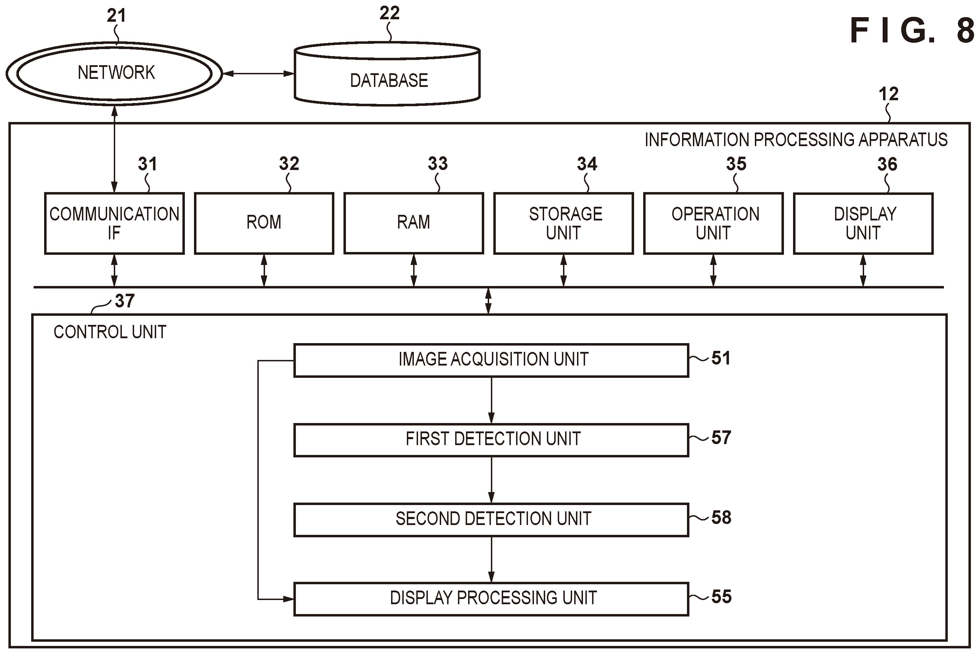

The configuration and processing of the information processing apparatus of the present embodiment will be described below with reference to FIG. 8. FIG. 8 is a block diagram showing an example of a configuration of a system (image processing system) including the information processing apparatus of the present embodiment. A difference from the configuration in the first embodiment shown in FIG. 1 is that the information processing apparatus 12 does not include the detection history acquisition unit 52, the sensitivity determination unit 53, and the detection unit 54 of the control unit 37 of FIG. 1, and instead includes a first detection unit 57 and a second detection unit 58. Below, differences from the configuration example of the first embodiment will be described.

The first detection unit 57 performs rough detection processing of a predetermined disease from the image acquired by the image acquisition unit 51. The second detection unit 58 performs detection processing of the predetermined disease based on the image acquired by the image acquisition unit 51 and the result obtained from the first detection unit 57. In the third embodiment, the output of the first detection unit 57 (the first detection result) may be treated as an example of the detection history information in the first embodiment. Also, determining, based on the first detection result, whether to execute the second detection unit 58 (and/or a parameter such as a threshold value used in the second detection unit 58) may, in other words, be said to be determining a detection setting.

### <Processing>

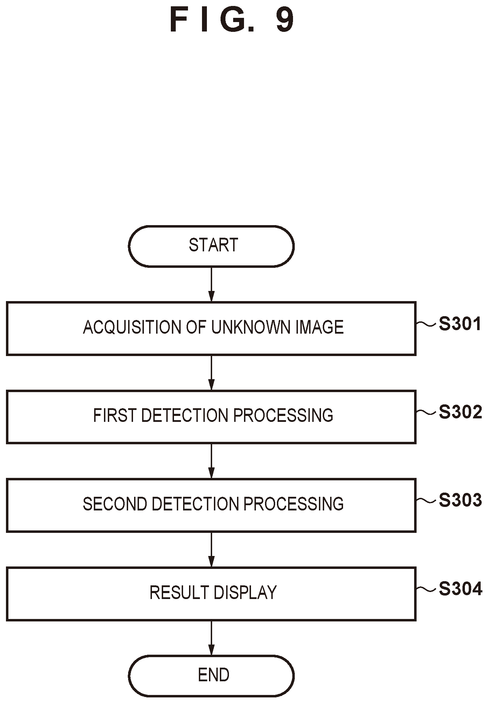

Next, an example of processing of the information processing apparatus 12 according to the present embodiment will be described with reference to FIG. 9. FIG. 9 is a flowchart showing an example of a processing procedure of the information processing apparatus 12 according to the present embodiment. In the steps shown in this flowchart, in steps S301 and S304, processing similar to steps S101 and S105 in the first embodiment shown in FIG. 2 is performed, respectively. Processing different from the first embodiment is steps S302 to S303. Below, differences from the processing procedure of the first embodiment will be mainly described.

### (Step S302: first detection processing)

In step S302, the first detection unit 57 analyzes the image acquired by the image acquisition unit 51 and roughly detects the disease. The image is assumed to be a three-dimensional image, and the rough extraction result (detection result) of bone metastasis is assumed to be a three-dimensional volume.

As one example of a method for performing rough extraction of bone metastasis, a method similar to that of step S102 of the first embodiment may be used, such as a method using an automatic or semi-automatic segmentation technique using a machine learning model including a deep learning model. Below, a method for setting a disease region based on automatic extraction processing using a machine learning model will be described.

As one example of the first detection processing, there may be used a method in which a machine learning model that calculates, for each pixel in the image when an input image is given, likelihood of a bone metastasis region is prepared, and a result of threshold processing on the likelihood is used as the rough detection result. That is, this is a method in which, as a result of threshold processing for all pixels, when a pixel exceeding a default threshold value exists, a positive determination is made on an "image" basis, and when such a pixel does not exist, a negative determination is made. An important point in determining this model and the threshold value is the same as the point described in step S102, and it is desirable to design them so that the accuracy of determining whether the image as a whole includes the predetermined disease becomes high.

Here, when a negative determination can be made on an "image" basis at the stage of this step S302, the detection processing of subsequent step S303 and/or the display processing of step S304 may be omitted. By omitting the second detection processing having higher sensitivity, specificity in evaluation on an image basis can be increased further. Here, determining whether to execute the second detection processing based on the result of the first detection processing corresponds to determining a detection setting (including whether to execute the second detection).

### (Step S303: second detection processing)

In step S303, the second detection unit 58 analyzes the image acquired by the image acquisition unit 51 and detects the disease. The extraction result (detection result) of bone metastasis is assumed to be a three-dimensional volume.

As the method for extracting bone metastasis, the same method as in step S302 may be used. However, the second detection processing of this step S303 is designed to have a sensitivity higher than that of the first detection processing. At this time, an important point in determining the second detection processing of this step S303 is the same as the point described in step S103, and it is desirable to design it by a method having high sensitivity on a "disease" basis.

When a machine learning model is used in step S302, the same model may be used in step S303, or a different model may be used. When the same model is used, for example, the same data may be referred to for the likelihood (likelihood map) of the bone metastasis region calculated for each pixel in step S302, and only the threshold value used in step S302 may be changed. Specifically, a medical image may be analyzed to calculate a likelihood map of the disease. Then, the first detection unit 57 may perform detection by processing the likelihood map using a first threshold value, and the second detection unit 58 may perform detection by processing the likelihood map using a second threshold value smaller than the first threshold value. That is, by performing threshold processing in step S303 using a threshold value lower than the threshold value used in step S302, the second detection processing can be performed at a sensitivity higher than that of the first detection processing. Also, the first threshold value and the second threshold value are detection sensitivity parameters that define detection sensitivity, and are one example constituting the detection setting.

Also, regarding steps S302 and S303, when machine learning models are used, different machine learning models trained using respective training-data groups modified so as to suit the corresponding steps may be used. For example, in step S302, from the viewpoint that specificity and sensitivity on a case basis are emphasized, a machine learning model trained including a substantial number of positive cases and negative cases may be used. In contrast, in step S303, from the viewpoint that sensitivity on a disease basis is emphasized, a machine learning model trained with fewer negative cases than positive cases may be used.

The above-described steps S302 to S303 correspond to the method described in the first embodiment in which processing is separated into two stages: image-based positive/negative determination processing and disease-region-based detection processing. That is, also in the present embodiment, processing is divided into two stages of image-based positive/negative determination processing and disease-region-based positive/negative determination processing, and sensitivity on a disease-region basis is changed based on a result of the image-based positive/negative determination. Thereby, there is an effect that accuracy can be increased from both viewpoints of the image basis and the disease-region basis.

As described above, in the present embodiment, in the process of detecting a predetermined disease included in medical image data, first detection processing of the disease and second detection processing having a sensitivity higher than that of the first detection processing are performed. Thereby, a detection result having higher specificity and high sensitivity can be provided to the user.

In the third embodiment, the detection history acquisition unit of the first embodiment may be regarded as corresponding to the first detection unit 57, and the detection unit 54 of the first embodiment may be regarded as corresponding to the second detection unit 58. That is, the detection history acquisition unit 52 of the first embodiment may include the first detection unit 57 that analyzes a medical image and detects information related to the disease as the detection history information. Then, the detection unit 54 of the first embodiment may include the second detection unit 58 that analyzes the medical image and detects the disease with a sensitivity higher than that of the first detection unit 57. In that case, the sensitivity determination unit 53 of the first embodiment may determine that the second detection unit 58 performs a detection operation when the disease is detected by the first detection unit 57. Thereby, the third embodiment can be realized in the apparatus configuration of the first embodiment.

As described in the respective embodiments above, the detection history information may be a rough extraction result of a disease for a medical image, or the number of past detection trials for a disease of the same patient, or alternatively, any past detection result.

According to the present disclosure, it becomes possible to detect a disease from a medical image with high accuracy.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (10) for detecting a disease from a medical image, comprising:
acquisition means (52) for acquiring detection history information related to the disease;
determination means (53) for determining, based on the detection history information, a detection setting for detecting the disease from the medical image; and
detection means (54) for detecting the disease from the medical image based on the detection setting,
wherein the detection setting includes (i) a detection sensitivity parameter defining detection sensitivity for the disease, and/or (ii) whether to execute, of a first detection of analyzing the medical image and detecting the disease and a second detection of detecting the disease with a sensitivity higher than that of the first detection, the second detection.

2. An information processing apparatus (10) for detecting a disease from a medical image, comprising:
acquisition means (52) for acquiring detection history information related to the disease;
determination means (53) for determining detection sensitivity for the disease based on the detection history information; and
detection means (54) for detecting the disease from the medical image at the detection sensitivity.

3. The information processing apparatus according to claim 2, wherein the detection history information includes a rough extraction result of the disease for the medical image, and
the determination means
determines the detection sensitivity to be a first sensitivity in a case where the rough extraction result indicates that the disease is not present, and
determines the detection sensitivity to be a second sensitivity higher than the first sensitivity in a case where the rough extraction result indicates that the disease is present.

4. The information processing apparatus according to claim 3, wherein the detection means uses, as a detection target, a region other than a region detected as a disease region by the rough extraction result.

5. The information processing apparatus according to claim 2, wherein the detection history information includes the number of past detection trials for the disease of the same patient, and
the determination means
determines the detection sensitivity to be a first sensitivity in a case where the number of detection trials is less than a threshold value, and
determines the detection sensitivity to be a second sensitivity higher than the first sensitivity in a case where the number of detection trials is equal to or greater than the threshold value.

6. The information processing apparatus according to claim 3, wherein the first sensitivity is a default sensitivity used in a case where the rough extraction result indicates that the disease is not present.

7. The information processing apparatus according to claim 2, further comprising display processing means for displaying the medical image and the detection result of the detection means.

8. The information processing apparatus according to claim 7, wherein the display processing means superimposes the detection result of the detection means on the medical image.

9. The information processing apparatus according to claim 7, wherein the detection history information includes a rough extraction result of the disease for the medical image, and
the display processing means displays the rough extraction result and the detection result of the detection means in a distinguishable manner.

10. The information processing apparatus according to claim 2, wherein the acquisition means switches a machine learning model used for detection based on image quality of the medical image.

11. The information processing apparatus according to claim 10, wherein the image quality of the medical image includes sharpness of the image.

12. The information processing apparatus according to claim 2, further comprising selection means for selecting, based on the detection history information, a target disease to be subjected to detection processing by the detection means.

13. The information processing apparatus according to claim 12, wherein a type of disease differs between a detection target in the detection history information and a detection target by the detection means.

14. The information processing apparatus according to claim 12, wherein the selection means selects some or all of a plurality of types of diseases as the target disease.

15. The information processing apparatus according to claim 12, wherein the selection means selects a disease correlated with the disease in the detection history information as the target disease.

16. The information processing apparatus according to claim 12, wherein the determination means determines detection sensitivity for the target disease other than the disease in the detection history information.

17. The information processing apparatus according to claim 16, wherein the determination means determines, based on correlation with the detection target in the detection history information, detection sensitivity for the target disease other than the disease in the detection history information.

18. The information processing apparatus according to claim 17, wherein the determination means
determines the detection sensitivity to be a first sensitivity for a target disease having a first correlation, and
determines the detection sensitivity to be a second sensitivity higher than the first sensitivity for a target disease having a second correlation stronger than the first correlation.

19. The information processing apparatus according to any one of claims 2 to 18, wherein the medical image is a three-dimensional image.

20. The information processing apparatus according to claim 1,
wherein the acquisition means comprises first detection means for analyzing the medical image and detecting information related to the disease as the detection history information,
the detection means comprises second detection means for analyzing the medical image and detecting the disease with a sensitivity higher than that of the first detection means,
and the determination means determines, as the detection setting, that the second detection means performs a detection operation in a case where the disease is detected by the first detection means.

21. The information processing apparatus according to claim 20, further comprising calculation means for analyzing the medical image and calculating a likelihood map of the disease,
wherein the first detection means performs detection by processing the likelihood map using a first threshold value,
the second detection means performs detection by processing the likelihood map using a second threshold value smaller than the first threshold value,
and the first threshold value and the second threshold value constitute the detection sensitivity parameter.

22. A control method for an information processing apparatus for detecting a disease from a medical image, the method comprising:
an acquisition step of acquiring detection history information related to the disease;
a determination step of determining, based on the detection history information, a detection setting for detecting the disease from the medical image; and
a detection step of detecting the disease from the medical image based on the detection setting,
wherein the detection setting includes (i) a detection sensitivity parameter defining detection sensitivity for the disease, and/or (ii) whether to execute, of a first detection of analyzing the medical image and detecting the disease and a second detection of detecting the disease with a sensitivity higher than that of the first detection, the second detection.

23. The control method for an information processing apparatus according to claim 22, wherein the detection setting includes detection sensitivity for the disease,
the determination step determines the detection sensitivity based on the detection history information, and
the detection step detects the disease from the medical image at the detection sensitivity.

24. The control method for an information processing apparatus according to claim 22,
wherein the acquisition step includes a first detection step of analyzing the medical image and detecting the disease as the detection history information,
the detection step includes a second detection step of analyzing the medical image and detecting the disease with a sensitivity higher than that of the first detection step, and
the determination step determines, as the detection setting, that the second detection step is executed in a case where the disease is detected by the first detection step.

25. A program for causing a computer to execute the control method for an information processing apparatus according to any one of claims 22 to 24.
